(19) Europäisches Patentamt / European Patent Office / Office européen des brevets

(11) **EP 2 729 591 B1**

(12) # EUROPÄISCHE PATENTSCHRIFT

(45) Veröffentlichungstag und Bekanntmachung des Hinweises auf die Patenterteilung:
**06.02.2019   Patentblatt 2019/06**

(21) Anmeldenummer: **12743400.9**

(22) Anmeldetag: **29.06.2012**

(51) Int Cl.:
*C23C 2/00* (2006.01)          *F16C 13/02* (2006.01)
*F16C 33/76* (2006.01)

(86) Internationale Anmeldenummer:
**PCT/EP2012/062729**

(87) Internationale Veröffentlichungsnummer:
**WO 2013/007539 (17.01.2013 Gazette 2013/03)**

(54) **VORRICHTUNG ZUR DRUCKMINDERUNG IN HOHLKÖRPERN IN MEDIEN BEI HÖHEREN TEMPERATUREN**

APPARATUS FOR REDUCTION OF PRESSURE IN HOLLOW BODIES IN HIGH TEMPERATURE ENVIRONMENTS

DISPOSITIF POUR RÉDUIR LA PRESSION À L'INTERIEUR D'OBJETS CREUX DANS UN MILIEU À HAUTE TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2011   DE 102011078878**

(43) Veröffentlichungstag der Anmeldung:
**14.05.2014   Patentblatt 2014/20**

(73) Patentinhaber:
• **ThyssenKrupp Steel Europe AG**
  **47166 Duisburg (DE)**
• **Fraunhofer Gesellschaft zur Förderung der angewandten Forschung E.V.**
  **80686 München (DE)**

(72) Erfinder:
• **GUSEK, Christopher**
  **58644 Iserlohn (DE)**
• **EISNER, Frank**
  **09127 Chemnitz (DE)**
• **HÜLSTRUNG, Joachim**
  **40629 Düsseldorf (DE)**
• **JINDRA, Fred**
  **57368 Lennestadt (DE)**
• **WILLEKE, Bert-Heiner**
  **57368 Lennestadt (DE)**
• **BLUMENAU, Marc**
  **58119 Hagen (DE)**
• **KOVAC, Markus**
  **44866 Bochum (DE)**
• **JENDRISCHIK, Gerd**
  **46535 Dinslaken (DE)**
• **PEITZ, Alfred**
  **46145 Oberhausen (DE)**
• **SCHÖNENBERG, Rudolf**
  **58675 Hemer (DE)**
• **ADLER, Jörg**
  **01662 Meißen (DE)**
• **HEYMER, Heike**
  **01217 Dresden (DE)**

(74) Vertreter: **Rauschenbach, Marion**
  **Rauschenbach Patentanwälte**
  **Bienertstrasse 15**
  **01187 Dresden (DE)**

(56) Entgegenhaltungen:
**WO-A1-2006/002822          WO-A1-2006/002822**
**US-A- 3 645 589          US-A- 3 645 589**

**Beschreibung**

Die Erfindung bezieht sich auf die Gebiete der Werkstoffwissenschaften und der Metallurgie und betrifft eine Vorrichtung zur Druckminderung in Hohlräumen in Medien bei höheren Temperaturen, wie sie beispielsweise in der metallverarbeitenden Industrie für Vorrichtungen zur Schmelztauchbeschichtung von metallischen Materialien zum Einsatz kommen kann.

Die Schmelztauchveredelung von metallischen Materialien mit einem metallischen Überzug stellt ein etabliertes und bekanntes Verfahren der Oberflächenveredelung dar, um die Gebrauchs- und Korrosionseigenschaften von Produkten zu verbessern. Dabei wird das zu beschichtende metallische Vormaterial kurzfristig in ein metallisches Beschichtungsbad eingetaucht. Im Fall der Schmelztauchveredelung von strangförmigen oder Flachprodukten, wie Drähten oder Bändern, bietet sich ein kontinuierlicher Prozessablauf an, bei welchem das zu beschichtende Produkt für einige Sekunden durch das Beschichtungsbad hindurchgeführt wird. Als Anwendungsfall hierzu ist die kontinuierliche Schmelztauchveredelung von Stahlflachprodukten mit einem metallischen Überzug auf Zn- oder Al-Legierungsbasis bekannt. Die baulichen Gegebenheiten einer solchen Schmelztauchbeschichtungsanlage verlangen unweigerlich eine Umlenkung und Stabilisierung der Passlinie des Flachproduktes. Dies wird üblicherweise durch eine Rollenanordnung realisiert, welche hinreichend bekannt ist (DE 19 511 943 A1; WO 2006/ 002 822 A1; EP 1 518 003 B1, US 3 645 589). Aufgrund des wirtschaftlichen Zwangs, die Betriebskosten gering zu halten, Anlagenstillstände zu vermeiden und eine hohe Produktqualität sicherzustellen, bestehen die Forderungen, den Verschleiß insgesamt und insbesondere den der Rollenanordnung zu minimieren. Deren Lebensdauer wird durch den hohen mechanischen und chemischen Verschleiß in Kombination mit der thermischen Belastung während des Dauereinsatzes im metallischen Beschichtungsbad limitiert. Dabei können Rotationswiderstand, Massenträgheitsmoment und Schlupfneigung, welche ebenfalls Verschleiß und Produktqualität beeinflussen, wesentlich durch die Konstruktion der Rollenanordnung beeinflusst werden.

Erfahrungsgemäß besitzen Hohlrollen diesbezüglich Vorteile gegenüber Vollrollen oder offenen Rollen. Allerdings birgt der angestrebte Einsatz von Hohlrollen die Gefahr eines Überdrucks im Innenraum. Ein solcher Überdruck resultiert z.B. aus dem Verdampfen und der Gasexpansion von Gasen und/oder Flüssigkeit oder Feuchtigkeit, die während der Herstellung der Hohlrolle in den Innenraum eingedrungen ist, infolge der hohen Temperaturen des Beschichtungsbades ($\sim 400$ - $800\,°C$). Die Volumenexpansion und der Druckaufbau entstehen bei der Durchwärmung des Innenraumes bei oder nach dem Einsatz der ursprünglich kalten Hohlrolle in das Schmelzbad. Daraus kann eine unerwünschte Deformation oder im schlimmsten Fall ein Bersten der Hohlrolle resultieren. Letzteres stört nicht nur den Betriebsablauf erheblich, sondern stellt eine konkrete Lebensgefahr für das Anlagenpersonal dar: Der ohne Vorwarnung plötzlich und schlagartig freigesetzte Überdruck vermag schmelzflüssiges Beschichtungsmaterial aus dem Kessel herauszuschleudern.

Die gezielte Ableitung eines Überdrucks über Entlüftungsvorrichtungen gestaltet sich als besonders schwierig, da das Eindringen des Beschichtungsbads in den Innenraum der Hohlrolle vermieden werden soll. Daher wird oftmals von einem Einsatz von Hohlrollen zugunsten der Arbeitssicherheit abgesehen.

Es besteht aber auch über die dargestellte Problematik der Hohlrollen in Schmelztauchbeschichtungsanlagen hinaus das Problem der Druckminderung/des Druckabbaus bei Anwendung von geschlossenen Hohlkörpern in einer Umgebung mit höherer Temperatur, insbesondere heißen Schmelzen, da übliche Entlüftungsvorrichtungen, wie z.B. Ventile oder Rohrdurchführungen aufwändig herzustellen und instand zu halten sind.

Der Stand der Technik offenbart verschiedene Lösungen betreffend der Entlüftung von Hohlrollen für den Einsatz in einem metallischen Beschichtungsbad.

Nach der DE 10 2007 045 200 A1 ist eine Hohlrolle bekannt, welche mit einem Entlüftungskanal durch den Rollenzapfen versehen ist Der Entlüftungskanal verbindet den Rolleninnenraum mit einem gasgefüllten Raumbereich im Zapfenlager. Dieser Raumbereich ist weiterhin über einen zweiten Entlüftungskanal mit dem Atmosphärendruck oberhalb des Beschichtungsbadspiegels verbunden. Das Eindringen von Metallschmelze in den Entlüftungsraum wird durch die geschlossene Konstruktion des Rollenlagers unterbunden.

Aus der WO 2006002822 A1 und der DE 10 319 840 B3 sind Konstruktionen bekannt, bei welchen ebenfalls der Rolleninnenraum über Entlüftungskanäle mit einem Expansionsraum im Rollenlager verbunden ist. Dieser Expansionsraum kann wiederum über weitere Kanäle zur Umgebungsatmosphäre hin entlüftet werden. Hierbei sollen Induktorspulen das Eindringen von Metallschmelze in den Expansionsraum vermeiden.

Gemäß der DE 43 07 282 C2 sind Gasüberleitungsbohrungen in Zapfen und Tragarmen von Hohlrollen bekannt. Diese Bohrungen werden allerdings nicht weiter spezifiziert.

Aus der DE 10 2009 040 961 A1 ist grundsätzlich eine Möglichkeit bekannt, eine Entlüftungsbohrung in einem Hohlkörper mit einem Verschließteil zu versiegeln. Allerdings ist die beschriebene Vorgehensweise für die in einem Beschichtungsbad eingetauchten Hohlrollen nicht anwendbar.

Die betriebliche Erfahrung für Schmelztauchbeschichtungsanlagen hat gezeigt, dass das Eindringen von schmelzflüssigem Beschichtungsbad in die Zapfenlagerung nicht dauerhaft vermieden werden kann, was mit ausgedehnten Stillstands- und Wartungszeiten einhergeht. Die konstruktiven Lösungen nach der DE 10 2007 045 200 A1 und DE 10 319 840 B3 können sich daher im betrieblichen Alltag nur mangelhaft behaupten. Die konstruktive einfachere Lösung nach DE 43 07 282 C2 vermeidet hingegen nicht effektiv das Eindringen des Beschichtungsbads in die Entlüftungsbohrung. Kommt es dort zu Schlackebildung, kann ein schwer erkennbarer Verschluss der Entlüftungsbohrung resultieren. Dies stellt ein erhebliches Gefahrenpotential dar, da unwissentlich der Einsatz einer Hohlrolle erfolgen kann, welche einen eventuell auftretenden Überdruck im Innenraum nicht kontrolliert abzuführen vermag. Es ist daher dem Anlagenbetreiber dringend empfohlen, von der Nutzung des gemäß DE 43 07 282 C2 genannten Lösungsvorschlages abzusehen.

Zusammengefasst weisen alle nach dem Stand der Technik bekannten Lösungen zur Entlüftung von Hohlrollen oder anderen Hohlkörpern für den Einsatz bei höheren Temperaturen und insbesondere in einem metallischen Beschichtungsbad erhebliche Mängel auf. Die kontinuierliche Schmelztauchveredelung von Langprodukten ist grundsätzlich vor die Herausforderung gestellt, die Lebensdauer des Badequipments zu verlängern sowie die Produktqualität sicherzustellen.

Die Aufgabe der Erfindung besteht in der Angabe einer Vorrichtung zur Druckminderung in Hohlkörpern in Medien bei höheren Temperaturen, insbesondere in Schmelzen, durch die eine Druckminderung im Innenraum der Hohlkörper sicher und kontrolliert realisiert werden kann und gleichzeitig das Eindringen der Medien bei den höheren Temperaturen verzögert oder ganz verhindert werden kann.

Die Aufgabe wird durch die in den Ansprüchen angegebene Erfindung gelöst. Vorteilhafte Ausgestaltungen sind Gegenstand der Unteransprüche.

Bei der erfindungsgemäßen Vorrichtung zur Druckminderung in Hohlkörpern in Medien bei höheren Temperaturen ist in Bereichen der Hohlkörper, die nicht dem bestimmungsgemäßen Gebrauch dienen, mindestens eine Öffnung zum Hohlraum des Hohlkörpers vorhanden, die gegenüber dem umgebenden Medium des Hohlkörpers mit mindestens einem Bauteil aus einem gaspermeablen metallischen oder keramischen Material verschlossen ist.

Vorteilhafterweise sind metallische Hohlkörper vorhanden, noch vorteilhafterweise sind als metallische Hohlkörper Rollen von Schmelztauchbeschichtungsanlagen vorhanden.

Weiterhin vorteilhafterweise sind die Hohlkörper in Schmelzen, Flüssigkeiten und/oder Gasen bei Temperaturen mindestens über dem Schmelzpunkt und/oder Erweichungspunkt der Materialien vorhanden.

Ebenfalls vorteilhafterweise sind die Hohlkörper in Schmelzen aus Metallen oder Metalllegierungen, Gläsern oder Polymeren vorhanden.

Und auch vorteilhafterweise ist das Bauteil in Seitenbereichen und/oder Lagerbereichen angeordnet.

Vorteilhaft ist es auch, wenn das Bauteil bei rollenförmigen Hohlkörpern in den Stirnflächen und/oder in den Zapfen zur Lagerung der rollenförmigen Hohlkörper, angeordnet ist, wobei noch vorteilhafterweise das Bauteil in den Zapfen der rollenförmigen Hohlkörper, deren innerer Hohlraum mit dem Hohlraum des rollenförmigen Hohlkörpers verbunden ist, angeordnet ist.

Ebenfalls vorteilhaft ist es, wenn das Bauteil als Scheibe ausgebildet ist.

Weiterhin vorteilhaft ist es, wenn mehrere Bauteile in mehreren Öffnungen angeordnet sind, oder in einer Öffnung mehrere Bauteile hintereinander angeordnet sind, wobei noch vorteilhafterweise im Falle, dass in einer Öffnung mehrere Bauteile hintereinander angeordnet sind, die einzelnen Bauteile aus unterschiedlichen Materialien bestehen.

Und auch vorteilhaft ist es, wenn das Bauteil Strukturierungen, vorteilhafterweise lokale Dickenverringerungen, aufweist.

Von Vorteil ist es auch, wenn das Bauteil aus einem porösen keramischen Material besteht, wobei noch vorteilhafterweise als keramisches Material poröse keramische Materialien oder poröse Kompositmaterialien aus unterschiedlichen Materialien vorhanden sind, und noch vorteilhafterweise als keramische Materialien Oxid- und Silikatkeramiken, wie Aluminiumoxid, Cordierit, Steatit, Magnesiumoxid, Zirkonoxid, Zirkonsilikat, Aluminiumtitanat, oder Nichtoxidkeramiken, wie Siliciumnitrid, SiAlONe, Aluminiumnitrid, Siliciumcarbid, Titancarbid, Titandiborid, oder Kohlenstoffwerkstoffe, wie Grafit oder Glaskohlenstoff oder Komposite, wie kohlenstoffgebundene Oxide oder Hartmetalle vorhanden sind.

Ebenfalls von Vorteil ist es, wenn das Bauteil eine Gaspermeabilität im Bereich von $10^{-14}$ m$^2$ bis $10^{-8}$ m$^2$ aufweist, vorteilhafterweise im Bereich von $10^{-13}$ bis $10^{-10}$ m$^2$.

Erfindungsgemäß wird die erfindungsgemäße Vorrichtung als Überdrucksicherung oder Berstsicherung verwendet.

Vorteilhafterweise erfolgt die Verwendung der Vorrichtung als Berstsicherung bei Berstdrücken im Bereich von 0,5 bis 2 MPa.

Mit der erfindungsgemäßen Lösung wird es erstmals möglich, eine sichere und kontrollierte Druckminderung von Hohlkörpern in Medien bei höheren Temperaturen, insbesondere in Schmelzen, zu realisieren. Damit wird insbesondere die Arbeitssicherheit von Anlagen mit derartigen Hohlkörpern deutlich verbessert.

Gleichzeitig wird erfindungsgemäß das Eindringen der Medien bei den höheren Temperaturen, also insbesondere der Schmelzen, in den Innenraum der Hohlkörper verzögert oder ganz verhindert. Als Medien bei höheren Temperaturen sollen erfindungsgemäß Schmelzen, erhitzte Flüssigkeiten und/oder erhitzte Gase oder Dämpfe verstanden werden.

Als Medien im Rahmen dieser Erfindung sollen Schmelzen, Flüssigkeiten oder Gase verstanden werden, wobei die erfindungsgemäße Lösung insbesondere für Schmelzen und noch genauer für Schmelzen von Metallen oder Metalllegierungen, Gläsern oder Polymeren eingesetzt werden soll.

Dementsprechend soll unter den höheren Temperaturen für Schmelzen im Rahmen dieser Erfindung Temperaturen verstanden werden, bei denen die Materialien mindestens bis über den Schmelzpunkt und/oder Erweichungspunkt erwärmt worden sind. Der Begriff "höhere Temperaturen" setzt sich dabei in Verhältnis zu der Ausgangstemperatur des Hohlkörpers, bevor dieser in Kontakt mit dem Medium gebracht wird. Das Medium hat eine höhere Temperatur als der Hohlkörper, wodurch es bei Einsatz des Hohlkörpers in das Medium zu einer Temperaturerhöhung im Hohlkörper infolge des Temperaturausgleiches kommt, wodurch sich wiederum eine Volumenexpansion des Gases im Inneren des Hohlkörpers ergibt, die zu dem unerwünschten Druckanstieg im Inneren führt. In den meisten Fällen wird der Hohlkörper eine ursprüngliche Temperatur von ca. -5 bis 40°C aufweisen, während die höheren Temperaturen in der Regel oberhalb von 80°C, im Fall von Metallschmelzen bei 350 bis 800°C oder höher liegen.

Überraschenderweise konnte die Aufgabenstellung dadurch gelöst werden, dass der Hohlkörper an entsprechender Stelle mit einem erfindungsgemäßen Bauteil versehen wurde. An diesen entsprechenden Stellen, die sich in Bereichen der Hohlkörper befinden, die nicht dem bestimmungsgemäßen Gebrauch dienen, werden oder sind Öffnungen eingebracht oder vorhanden, in die das erfindungsgemäße Bauteil eingesetzt wird.

Das erfindungsgemäße Bauteil ist vorteilhafterweise in Form einer Scheibe ausgebildet und noch vorteilhafterweise eine Keramikscheibe aus einem porösen keramischen Material, welches unter den Medien und den höheren Temperaturen zumindest über einen längeren Zeitraum keine Korrosions- und/oder Zerstörungserscheinungen zeigt.

Im Fall einer Hohlrolle in Schmelztauchbeschichtungsanlagen sind unter den Bereichen, die dem bestimmungsgemäßen Gebrauch dienen, die Mantelflächen der Hohlrolle zu verstehen, da dort das zu beschichtende Gut mit der Hohlrolle in Kontakt kommt. An allen anderen Stellen der Hohlrolle kann das erfindungsgemäße Bauteil eingebaut werden. Vorteilhafterweise wurde das Bauteil in den Hohlzapfen eingebaut, so dass auf der einen Seite des Bauteils die Umgebungsbedingungen des Hohlraumes der Hohlrolle anlagen und auf der anderen Seite die Schmelze. Dabei ist zu berücksichtigen, dass das erfindungsgemäße Bauteil an den Rändern gasdicht in die Hohlrolle eingebaut werden sollte, damit das erfindungsgemäße Bauteil bei dem Gasdurchtritt nicht aus dem Hohlzapfen herausgedrückt wird und andererseits die Schmelze nicht dort in den Innenraum des Hohlzapfens eindringen kann. Dies kann beispielsweise durch kohlenstoffhaltige Dichtmassen erfolgen. Das erfindungsgemäße Bauteil aus einem gaspermeablen Material verschließt somit den Hohlraum des Hohlkörpers gegenüber der Schmelze. Das erfindungsgemäße gaspermeable Material ist porös und dadurch durchlässig gegenüber Gasen, die aus dem Innenraum entweichen und somit zur Druckminderung und -entlastung führen.

Dabei zeichnet sich das poröse Material durch Poreneigenschaften aus, die gleichzeitig ein Eindringen der Schmelze durch das Material in den Innenraum des Hohlkörpers und insbesondere des Hohlrolleninnenraumes vermeiden.

Das wird dadurch erreicht, dass die Benetzungseigenschaften des porösen Materials so ausgewählt werden, dass entweder ein Eindringen der Schmelze infolge einer schlechten Benetzung nicht oder nur unzureichend erfolgt oder im Fall einer Benetzung zwar ein Eindringen der Schmelze in das poröse Material erfolgt, aber die Schmelze infolge hoher Kapillarkräfte dort festgehalten wird und nicht in den Hohlkörperinnenraum eindringt. Das Eindringen wird verhindert, wenn die Kapillarkräfte höher sind, als der auf den Hohlraum von der Schmelze wirkenden sogenannten hydrostatischen Druck, der im Falle der Hohlrollen von Schmelztauchbeschichtungsanlagen durch die Eintauchtiefe der Hohlrolle im Schmelzenbad, die Dichte der Schmelze und die Erdanziehungskraft bestimmt ist.

Die Auswahl des porösen Materials kann unter Berücksichtigung des Benetzungsverhaltens, der Umgebungsbedingungen, insbesondere der Oberflächenspannung der Schmelze und der Porencharakteristik (Porengröße) des porösen Materials gemäß der bekannten sogenannten Washburn-Gleichung und durch eine Abstimmung auf den im Einsatz auftretenden hydrostatischen Druck durch einen Fachmann leicht erfolgen.

Die Kapillarkraft eines porösen Stoffes im Kontakt mit einer Schmelze wird durch die Washburn-Gleichung beschrieben:

$$p_k = \frac{2\gamma}{r} \cdot \cos\phi$$

pk = Kapillartdreuck [Pa]

$\gamma$ = Oberflächenspanmung [Jm⁻²]

r = Kapollarradius [m]

$\phi$ = Benetzungswinkel [°]

Sowohl bei Nichtbenetzung, als auch bei Benetzung des porösen Materials mit einer Schmelze wird ein Durchdringen von Gasen aus dem Innenraum des Hohlkörpers durch das poröse Material in die Schmelze gewährleistet, sobald der Gasdruck im Inneren des Hohlkörpers größer wird, als die Summe aus hydrostatischem Druck der Schmelze, dem Durchströmungswiderstand des porösen Materials (Abschätzung gemäß der Darci-Gleichung):

$$\Delta p = \frac{\eta}{k} \cdot d \cdot v \qquad (1)$$

$\Delta p$ = Druckverlu st [Pa]

$\eta$ = dynamische Viskosität [Pa·s]

$k$ = spezifische Permeabili tät [$m^2$]

$d$ = Materialst ärke [m]

$v$ = Durchström ungesgeschx indigkeit [$m \cdot s^{-1}$]

und im Fall der Benetzbarkeit dem Kapillardruck. Der Durchtritt der Gase erfolgt so lange, bis ein Druckgleichgewicht erreicht wird, so dass ein gefährlicher Druckaufbau im Inneren des Hohlkörpers zuverlässig verhindert werden kann.

Zur Verbesserung der Sicherheitsfunktion ist es vorteilhaft, das Bauteil aus dem gaspermeablen, porösen Material auch im Sinne einer Überdrucksicherung oder Berstscheibe auszulegen. Das heißt, dass es bei der unvorhergesehenen Überschreitung eines bestimmten Druckes oder Druckbereiches zu einer starken Verformung oder Zerstörung des Bauteiles aus dem porösen Material kommt, wodurch der bis dahin durch das poröse Bauteil verschlossene Bereich teilweise oder vollständig geöffnet wird und das Gas unter Druckabbau in die Umgebung oder Schmelze entweichen kann.

Dies führt zwar zu einer Zerstörung des erfindungsgemäßen Bauteils und möglicherweise nachfolgend zu einem Eindringen der Schmelze in den Hohlkörper, verhindert aber größere und nicht vorhersehbare Schäden durch eine Verformung oder Zerstörung des Hohlkörpers selbst im Sinne einer größtmöglichen Arbeitssicherheit.

Vorteilhaft ist auch, dass die Richtung, die Menge und der Druck des aus dem zerstörten Bauteil austretenden Gases vorhersehbar ist und weitere Schäden durch zusätzliche sicherheitstechnische Vorkehrungen vermieden oder verringert werden können.

Die Auslegung der zusätzlichen Sicherheitsfunktion auf einen bestimmten Berstdruck oder Berstdruckbereich sind unter Berücksichtigung der Festigkeitseigenschaften des porösen Materials, der Geometrie und der Befestigung des gaspermeablen, porösen Bauteiles durch einen Fachmann leicht möglich. Dabei kann auch durch Einbringung gezielter Querschnittsveränderungen im Bauteil eine oder mehrere Sollbruchstellen vorgesehen werden, die einen Riss oder Bruch des porösen Formteiles an vorbestimmten Stellen ermöglicht. Dadurch kann eine gezielte Fragmentierung des Bauteiles erreicht werden, so dass ein unbeabsichtigtes Verstopfen des nach dem Bersten geöffneten Querschnittes durch herausgelöste Teile des Bauteiles vermieden wird.

Durch eine Überwachungseinrichtung kann dabei sichergestellt werden, dass der eingetretene Berstfall erkannt wird, damit der Hohlkörper rechtzeitig aus dem Schmelzenbad entnommen und das Bauteil erneuert werden kann.

Als gaspermeables Material sollte ein Material ausgewählt werden, das den Einsatzbedingungen, d.h. der Temperatur der Schmelze und deren Korrosion, sowie den wirkenden mechanischen Kräften widersteht.

Es können erfindungsgemäß alle gaspermeablen metallischen Materialien, gaspermeablen keramische Materialien oder gaspermeablen Kompositmaterialien aus unterschiedlichen Materialklassen eingesetzt werden. Je nach Schmelze können als metallische Materialien hochlegierte Stähle, Stellite oder allgemein hochtemperatur- und korrosionsresistente Werkstoffe z.B. auf Ni-Basis verwendet werden, als keramische Materialien z.B. Oxid- und Silikatkeramiken, wie Aluminiumoxid, Cordierit, Steatit, Magnesiumoxid, Zirkonoxid, Zirkonsilikat, Aluminiumtitanat oder Nichtoxidkeramiken, wie Siliciumnitrid, SiAlONe, Aluminiumnitrid, Siliciumcarbid, Titancarbid, Titandiborid, oder auch Kohlenstoffwerkstoffe, wie z.B. Grafit oder Glaskohlenstoff eingesetzt werden, sowie Komposite, wie z.B. kohlenstoffgebundene Oxide oder Hartmetalle.

Die spezifische Permeabilität k ist eine Eigenschaft des porösen Materials und wird im Wesentlichen von der Porengröße D und dem Porenvolumen ε, sowie von der Tortuosität der Porenkanäle beeinflusst.

Eine einfache Abschätzung von k nach der Gleichung von Ergun (ohne Tortuosität) liefert

$$k = \frac{\varepsilon^3}{150 \cdot (1 - \varepsilon)^2} \cdot D^2 \qquad (3)$$

$k$ = spezifische Permeabilität [$m^2$]

$\varepsilon$ = Porosität [−]

$D$ = mittl. Porendurchmesser [m]

Diese Gleichung liefert eine grobe Abschätzung; im realen Werkstoff können die Tortuosität, Porendurchmesserverteilung und evtl. Anisotropien zu Abweichungen führen, so dass für den konkreten Fall auf Messwerte zurückgegriffen werden muss.

Weiterhin können Materialien mit schlechterer Korrosionsbeständigkeit mit korrosionsstabileren Schutzschichten versehen werden, wobei diese Schutzschichten sowohl im Kontaktbereich zur Schmelze, als auch auf der inneren Oberfläche der Poren aufgebracht sein können. Die stoffliche Auswahl ist für einen Fachmann aus den einschlägigen Erfahrungen bei Anwendungen bei höheren Temperaturen und insbesondere in Schmelzenanwendungen resistenten Werkstoffen leicht möglich.

Bevorzugt für den Einsatz in Zink- und Aluminiumschmelzen mit einer Schmelzentemperatur zwischen 400 - 800 °C sind vor allem korrosionsresistente und schlecht von der Schmelze benetzbare keramische Materialien, wie Siliciumnitrid, SiAlONe, Aluminiumnitrid, Titandiborid, aber auch Aluminiumoxid-, Siliciumcarbid- oder Kohlenstoff-Werkstoffe.

Zur Realisierung der Gaspermeabilität und damit der Porosität der Werkstoffe für das Bauteil können bekannte Verfahren und Strukturierungsmethoden genutzt werden. Dazu gehören z.B. die Versinterung von Pulvern unter Erhaltung der Zwischenräume von Pulverpartikeln, die Versinterung von Kurz- oder Langfasern, die Verwendung von Platzhalterstoffen, Abformungsmethoden aus Templaten, Schäumungsverfahren etc..

Bei der Porosität muss es sich um die sogenannte offene Porosität handeln, die eine Durchströmung von Gasen zulässt. Das ist bei gleichmäßig verteilten, isotropen Poren ab einem Gesamt-Porenanteil von ca. >35 % möglich. Bei gerichteten Porenkanälen können aber auch schon ausreichende Durchströmbarkeiten bei geringeren Porenanteilen erreicht werden.

Die Größe der Poren kann im Bereich von 1-1000 $\mu$m liegen, wobei bevorzugt Materialien mit Poren im Bereich von 5 bis 200 $\mu$m eingesetzt werden. Die porösen Materialien weisen in der Regel eine bestimmte Porengrößenverteilung auf, die typischerweise durch das Verfahren der Quecksilberporosimetrie oder auch der Permeabilitätsporometrie bestimmt wird. Bevorzugt für die Anwendung ist dabei eine enge Porengrößenverteilung, die - ausgehend von bekannten Verteilungsfunktionen der Porengrößenverteilung (LNVT, RRSB-VT, GGS-VT) - durch einen Verhältniswert von $d90/d10 \geq 0,5$ beschrieben wird.

Weiterhin ist es möglich, Bauteile mit sogenannter asymmetrischer oder gradierter Porosität oder Porenanteil und Porengröße zu verwenden. Zum Beispiel kann ein Material mit gröberer Porosität als Träger eingesetzt werden, auf das eine dünne Schicht (Membran) einer feiner porösen Schicht aufgebracht ist. Oder es ist ebenso möglich zwei oder mehrere Formteile aus unterschiedlichen Materialien (unterschiedlich sowohl stofflich und/oder hinsichtlich der Poreneigenschaften) hintereinander bezüglich der Durchströmungsrichtung einzusetzen.

Das gaspermeable poröse Material kann als Bauteil in verschiedenen geometrischen Formen eingesetzt werden. Dazu gehören z.B. gerade oder gebogene Scheiben, Zylinder, einseitig geschlossene Zylinder (Hülsen), Kegelstümpfe oder auch komplexere Formen, wie Konen. Die Auswahl richtet sich nach der Anordnung des gaspermeablen Materials in der Öffnung des Hohlkörpers. Bevorzugt ist eine Form mit einer gleichmäßigen Wandstärke.

Weiterhin ist es möglich, dass mehrere Bauteile in mehreren Öffnungen im Hohlkörper angeordnet sind.

Eben ist es erfindungsgemäß möglich, dass innerhalb einer Öffnung im Hohlkörper mehrere Bauteile hintereinander angeordnet sind. Dabei können im Falle des Vorhandenseins mehrerer Bauteile in einem Hohlkörper die Materialien der einzelnen Bauteile unterschiedlich sein und insbesondere im Hinblick auf Berstdruckfestigkeit, Porosität und/oder Permeabilität unterschiedlich ausgebildet sein.

Ebenso ist eine Strukturierung der Bauteile derart erfindungsgemäß möglich, dass beispielsweise lokale Dickenverringerungen vorhanden sind, die eine Sollbruchstelle im Berstfalle darstellen können. Diese Dickenverringerungen können 5 % der Dicke oder mehr betragen.

Die Festlegung der durchströmten Fläche richtet sich nach dem erwarteten zusätzlichen Gasvolumen, das bei Erwärmung des Hohlkörpers, z.B. durch Eintauchen in das Schmelzbad oder einen Vorwärmschritt durch Expansion des Gases oder der im Hohlkörper enthaltenen oder durch Temperaturerhöhung entstehenden Stoffe typischerweise entsteht. Dies hängt im Wesentlichen vom Hohlraumvolumen des Hohlkörpers, der Temperaturdifferenz und der Gas- oder Stoffzusammensetzung ab. Nach Auswahl des gaspermeablen Materials und Feststellung dessen spezifischer Permeabilität kann durch einen Fachmann mithilfe der bekannten Darci-Gleichung leicht die erforderliche Fläche und Dicke des Formteils ermittelt werden, die notwendig ist, um einen ausreichenden Gasdurchtritt durch das Bauteil zu erreichen und den Innendruck im Hohlkörper entsprechend zu mindern oder zu begrenzen. In jedem Fall wird die erforderliche Querschnittsfläche des Bauteils sehr klein, d.h. z.B. <1% gegenüber der Mantelfläche des Hohlkörpers sein und die durchströmte Dicke nur wenige mm bis cm betragen. Im Fall von Hohlrollen in Schmelztauchanlagen kann daher der Einbau vorteilhafterweise in einen oder beide Lagerhohlzapfen oder in den Stirnseiten der Hohlrollen erfolgen, wobei der Einsatz des Bauteils als plane Scheibe oder zylindrische Hülse bevorzugt ist.

Im Fall der gleichzeitigen Auslegung des Formteiles im Sinne einer Überdrucksicherung oder Berstscheibe ist es auch möglich, zwei oder mehrere Bauteile mit unterschiedlichen mechanischen Eigenschaften, unterschiedlicher Permeabilität und/oder unterschiedlichem Benetzungsverhalten einzusetzen. Dadurch kann erreicht werden, dass nur ein Bauteil bei einer bestimmten Druckbeanspruchung birst, während ein oder mehrere weitere Bauteile in der Entlüftungsvorrichtung intakt bleiben und das Eindringen der Schmelze auch nach der Zerstörung der ersten Scheibe verhindern oder verlangsamen. Dabei kann auch ein Material eingesetzt werden, welches gezielt mit der eindringenden Schmelze reagiert und deren Durchtritt verlangsamt oder verhindert.

Für den Einbau des/der Bauteils/teile ist zu berücksichtigen, dass eine gasdichte Vorrichtung oder Einspannung verwendet wird, die auch eine Dichtigkeit gegenüber dem Eindringen von Schmelze gewährleistet. Außerdem ist zu berücksichtigen, dass bei einer Auswahl von porösen Materialien mit unterschiedlichem thermischen Ausdehnungskoeffizienten im Vergleich zu dem Material des Hohlkörpers keine oder nur geringe mechanische Spannungen bei Temperaturänderungen auftreten. Zur Befestigung können stoffschlüssige Verbindungstechniken, wie Löt-, Schweiß- und Klebverbindungen eingesetzt werden, oder auch nicht stoffschlüssige Verbindungen wie Klemm-, Schrumpf- oder Schraubverbindungen eingesetzt werden, wobei auch zusätzliche Dichtungsmaterialien eingesetzt werden können. Im Fall des Einsatzes von porösen keramischen Materialien mit niedrigem thermischem Ausdehnungskoeffizienten sind flächige Klemmverbindungen unter Verwendung elastischer Dichtungsmaterialien bevorzugt. Als Dichtungsmaterial sind hierbei z.B. kohlenstoff-, keramikfaser- oder glimmerhaltige Dichtungsmaterialien bevorzugt. Dabei ist es vorteilhaft, wenn die Verbindung lösbar ist, so dass das Formteil aus dem porösen Material und das Dichtungsmaterial bei einer Revision oder Überarbeitung z.B. der Hohlrollen leicht ausgewechselt werden kann.

Die erfindungsgemäße Lösung grenzt sich vom bekannten Stand der Technik insbesondere bezüglich Rollenvorrichtungen für Schmelztauchbeschichtungsanlagen dadurch ab, dass:

- keine Abdichtung des Zapfens gegenüber dem Beschichtungsbad notwendig ist,
- auf zusätzliche Öffnungen, welche den Hohlraum im Zapfen mit der Umgebungsatmosphäre verbinden, verzichtet werden kann,
- das Eindringen des Beschichtungsbads in den Hohlraum des Zapfens effektiv vermieden werden kann,
- erstmals ein gaspermeables Material, insbesondere eine gaspermeable Keramik, als Bauteil zum Verschluss der Öffnung in den Rollen eingesetzt wird.

Die erfindungsgemäße Lösung besitzt gegenüber dem Stand der Technik die folgenden wesentlichen Vorteile:

- Ein deutlich einfacheres Konstruktionsprinzip bei geringem Verschleiß. Daraus folgt eine wesentliche Lebenszeitverlängerung des Badequipements bei Reduzierung des Wartungsaufwands.
- Die Ermöglichung der sicheren Verwendung von Hohlrollen in einem metallischen Beschichtungsbad. Damit können beste Mitlaufeigenschaften bei einer gleichzeitigen erheblichen Steigerung der Arbeitssicherheit ermöglicht werden.

Die erfindungsgemäße Lösung wird nachfolgend an einem Ausführungsbeispiel näher erläutert.

Beispiel

Eine hohle Bodenrolle zur Schmelztauchbeschichtung von Stahlband wird in ein Aluminiumschmelzbad von 680°C eingesetzt. Der zylindrische Innenhohlraum in der Rolle hat die Abmessungen Durchmesser 680 mm, Länge 1670 mm, was ein Volumen von 0,606 $m^3$ ergibt, welches vor dem Einsatz mit Luft von 20°C gefüllt ist. Bei Eintauchen der Rolle in das Schmelzbad erwärmt sich die Luft bis zum stationären Zustand ebenfalls auf die Badtemperatur von 680°C, wodurch sich eine Volumenexpansion der Luft um 1,394 $m^3$ ergibt. Die Rolle wird auf eine Tiefe von 2,5 Meter in das Schmelzenbad abgesenkt, so dass bei einer Dichte des Aluminiums von 2,38 $g/cm^3$ ein hydrostatischer Druck von 0,06 MPa auf die Rolle einwirkt.

In einem Zapfen der Rolle zu deren Lagerung ist eine durchgängige zylindrische Bohrung von 40 mm Durchmesser eingebracht, die den Innenhohlraum der Rolle mit der äußeren Umgebung verbindet. Die zylindrische Bohrung im Lagerzapfen ist auf einer Länge von 30 mm auf eine zylindrische Kavität mit Durchmesser 50 mm erweitert. In diese Kavität ist eine Scheibe aus poröser Keramik mit einem Durchmesser von 48 mm bei einer Dicke von 5 mm eingebracht, die beidseitig auf eine 4 mm breite Ringdichtung aus 1 mm starker Grafitfolie aufliegt und mittels eines metallischen Spannringes angedrückt wird. Dadurch ergibt sich ein freier durchströmbarer Querschnitt der porösen Keramikscheibe von 40 mm. Nach Eintauchen der Hohlrolle dringt die Schmelze in die zylindrische Bohrung des Zapfens bis zu der porösen Keramikscheibe vor.

Die Keramikscheibe besteht aus poröser Siliciumnitrid-Keramik mit einer Gesamtporosität von 51% bei einer mittleren Porenweite von 12 $\mu$m, wobei die Porengrößenverteilung eng ausgebildet ist mit einem d90/d10-Verhältnis von 3 (Werte mit Quecksilberporosimetrie ermittelt). Die spezifische Permeabilität dieser Keramik, bestimmt mittels Permeabilitätsporometrie, beträgt $1,7 \times 10^{-12}$ $m^2$. Bei einer solchen Permeabilität und der vorhandenen Geometrie wird das im Inneren der Hohlrolle expandierende Gasvolumen innerhalb von 600 Sekunden durch Ausströmung in die Schmelze abgebaut, wobei gemäß der Darci-Gleichung kurzzeitig ein maximaler Gegendruck von 0,18 MPa entsteht.

Der Benetzungswinkel von Siliciumnitrid mit Aluminiumschmelze bei 700°C beträgt 160° (D. A. Weirauch Jr., Technologically significant capillary phenomena in hightemperature materials processing - Examples drawn from the aluminium industry, Current Opinion in Solid State & Material Science 9 (2005) 230-240), die Oberflächenspannung von Aluminiumschmelze bei 680°C beträgt 1,07 $J/m^2$ (Kh.Kh. Kalazhokov, Z.Kh. Kalazhokov, Kh.B. Khokonov, Surface Tension of Pure Aluminium Melt, Technical Physics Vol 48, No 2, 2003, 272-273). Bei Kontakt der porösen Keramik mit der 680°C heißen Aluminiumschmelze ergibt sich gemäß Washburn-Gleichung ein negativer Kapillardruck von -0,35 MPa, d.h. die Scheibe wird nicht benetzt und auch bei dem hydrostatischen Druck der Schmelze auf die Scheibe erfolgt noch keine Infiltration.

Die Berstdruckfestigkeit der Scheibe wird durch Vortests mit einer analogen Einspannung ermittelt. Diese beträgt in etwa 1,2 MPa, so dass bei einem unvorhergesehenen Druckanstieg im Inneren der Rolle ein Zerbersten der Scheibe und eine Druckentlastung durch Ausströmen des Gases durch die Zapfenbohrung in die Schmelze erreicht werden.

## Patentansprüche

1. Vorrichtung zur Druckminderung in Hohlkörpern in Medien bei höheren Temperaturen, bei der für eine sichere und kontrollierte Druckminderung im Innenraum der Hohlkörper in Bereichen der Hohlkörper, die nicht dem bestimmungsgemäßen Gebrauch dienen, mindestens eine Öffnung zum Hohlraum des Hohlkörpers vorhanden ist, die gegenüber dem umgebenden Medium des Hohlkörpers mit mindestens einem Bauteil aus einem gaspermeablen metallischen oder keramischen Material verschlossen ist.

2. Vorrichtung nach Anspruch 1, bei der metallische Hohlkörper vorhanden sind, wobei vorteilhafterweise als metallische Hohlkörper Rollen von Schmelztauchbeschichtungsanlagen vorhanden sind.

3. Vorrichtung nach Anspruch 1, bei der die Hohlkörper in Schmelzen, Flüssigkeiten und/oder Gasen bei Temperaturen mindestens über dem Schmelzpunkt und/oder Erweichungspunkt der Materialien vorhanden sind.

4. Vorrichtung nach Anspruch 1, bei der die Hohlkörper in Schmelzen aus Metallen oder Metalllegierungen, Gläsern oder Polymeren vorhanden sind.

5. Vorrichtung nach Anspruch 1, bei der das Bauteil in Seitenbereichen und/oder Lagerbereichen angeordnet ist.

6. Vorrichtung nach Anspruch 1, bei der das Bauteil bei rollenförmigen Hohlkörpern in den Stirnflächen und/oder in den Zapfen zur Lagerung der rollenförmigen Hohlkörper, angeordnet ist, wobei vorteilhafterweise das Bauteil in den Zapfen der rollenförmigen Hohlkörper, deren innerer Hohlraum mit dem Hohlraum des rollenförmigen Hohlkörpers verbunden ist, angeordnet ist.

7. Vorrichtung nach Anspruch 1, bei der das Bauteil als Scheibe ausgebildet ist.

8. Vorrichtung nach Anspruch 1, bei der mehrere Bauteile in mehreren Öffnungen angeordnet sind, oder in einer Öffnung mehrere Bauteile hintereinander angeordnet sind, wobei vorteilhafterweise in einer Öffnung mehrere Bauteile hintereinander angeordnet sind, wobei die einzelnen Bauteile aus unterschiedlichen Materialien bestehen.

9. Vorrichtung nach Anspruch 1, bei der das Bauteil Strukturierungen, vorteilhafterweise lokale Dickenverringerungen, aufweist.

10. Vorrichtung nach Anspruch 1, bei der das Bauteil aus einem porösen keramischen Material besteht, wobei vorteilhafterweise als keramisches Material poröse keramische Materialien oder poröse Kompositmaterialien aus unterschiedlichen Materialien vorhanden sind.

11. Vorrichtung nach Anspruch 10, bei der als keramische Materialien Oxid- und Silikatkeramiken, wie Aluminiumoxid, Cordierit, Steatit, Magnesiumoxid, Zirkonoxid, Zirkonsilikat, Aluminiumtitanat, oder Nichtoxidkeramiken, wie Siliciumnitrid, SiAlONe, Aluminiumnitrid, Siliciumcarbid, Titancarbid, Titandiborid, oder Kohlenstoffwerkstoffe, wie Grafit oder Glaskohlenstoff oder Komposite, wie kohlenstoffgebundene Oxide oder Hartmetalle vorhanden sind.

12. Vorrichtung nach Anspruch 1, bei der das Bauteil eine Gaspermeabilität im Bereich von $10^{-14}$ m$^2$ bis $10^{-8}$ m$^2$ aufweist, vorteilhafterweise im Bereich von $10^{-13}$ bis $10^{-10}$ m$^2$.

13. Verwendung der Vorrichtung gemäß mindestens einem der Ansprüche 1 bis 12 als Überdrucksicherung oder Berstsicherung.

14. Verwendung der Vorrichtung nach Anspruch 13 als Berstsicherung bei Berstdrücken im Bereich von 0,5 bis 2 MPa.

## Claims

1. Device for reducing pressure in hollow bodies in media at higher temperatures in which, to allow pressure to be reduced in the cavity of the hollow bodies in a reliable and controlled manner, in regions of the hollow bodies that do not serve the intended use there is at least one opening to the hollow space of the hollow body, which is sealed from the surrounding medium of the hollow body by at least one component of a gas-permeable metal or ceramic material.

2. Device according to Claim 1, in which metal hollow bodies are present, advantageously rollers of hot-dip coating systems being present as the metal hollow bodies.

3. Device according to Claim 1, in which the hollow bodies are present in molten materials, liquids, and/or gases at temperatures at least above the melting point and/or softening point of the materials.

**4.** Device according to Claim 1, in which the hollow bodies are present in molten materials of metals or metal alloys, glasses, or polymers.

**5.** Device according to Claim 1, in which the component is arranged in side regions and/or bearing regions.

**6.** Device according to Claim 1, in which the component in the case of roller-shaped hollow bodies is arranged in the end faces and/or in the journals for mounting the roller-shaped hollow bodies, the component advantageously being arranged in the journals of the roller-shaped hollow bodies, the inner hollow space of which is connected to the hollow space of the roller-shaped hollow body.

**7.** Device according to Claim 1, in which the component is formed as a disc.

**8.** Device according to Claim 1, in which multiple components are arranged in multiple openings or multiple components are arranged one behind the other in an opening, advantageously multiple components being arranged one behind the other in an opening, the individual components consisting of different materials.

**9.** Device according to Claim 1, in which the component has patternings, advantageously local reductions in thickness.

**10.** Device according to Claim 1, in which the component consists of a porous ceramic material, advantageously porous ceramic materials or porous composite materials of different materials being present as the ceramic material.

**11.** Device according to Claim 10, in which oxide ceramics and silicate ceramics such as aluminium oxide, cordierite, steatite, magnesium oxide, zirconium oxide, zirconium silicate, aluminium titanate, or non-oxide ceramics such as silicon nitride, SiAlONs, aluminium nitride, silicon carbide, titanium carbide, titanium diboride, or carbon materials such as graphite or glassy carbon, or composites such as carbon-bound oxides or hard metals are present as ceramic materials.

**12.** Device according to Claim 1, in which the component has a gas permeability within the range of $10^{-14}$ m$^2$ to $10^{-8}$ m$^2$, advantageously within the range of $10^{-13}$ to $10^{-1}$ m$^2$.

**13.** Use of the device according to at least one of Claims 1 to 12 as excess pressure protection or burst protection.

**14.** Use of the device according to claim 13 as burst protection for bursting pressures within the range of 0.5 to 2 MPa.

**Revendications**

**1.** Dispositif pour réduire la pression à l'intérieur de corps creux dans un milieu à haute température, dans lequel, pour la réduction sûre et contrôlée de la pression dans l'espace intérieur des corps creux, il se trouve dans des régions des corps creux, qui ne servent pas pour l'utilisation envisagée, au moins une ouverture vers la cavité du corps creux, qui est fermée par rapport au milieu entourant le corps creux avec au moins un composant en un matériau métallique ou céramique perméable au gaz.

**2.** Dispositif selon la revendication 1, dans lequel il se trouve des corps creux métalliques, dans lequel il se trouve avantageusement comme corps creux métalliques des rouleaux d'installations de revêtement par immersion dans un bain en fusion.

**3.** Dispositif selon la revendication 1, dans lequel les corps creux se trouvent dans des bains en fusion, des liquides et/ou des gaz à des températures au moins supérieures au point de fusion et/ou au point de ramollissement des matériaux.

**4.** Dispositif selon la revendication 1, dans lequel les corps creux se trouvent dans des bains en fusion de métaux ou d'alliages métalliques, de verres ou de polymères.

**5.** Dispositif selon la revendication 1, dans lequel le composant est disposé dans des régions latérales et/ou des régions de paliers.

**6.** Dispositif selon la revendication 1, dans lequel le composant est disposé, dans le cas de corps creux en forme de rouleau, dans les faces frontales et/ou dans les tourillons destinés à l'appui des corps creux en forme de rouleau, dans lequel le composant est avantageusement disposé dans les tourillons des corps creux en forme de rouleau, dont la cavité intérieure est reliée à la cavité du corps creux en forme de rouleau.

**7.** Dispositif selon la revendication 1, dans lequel le composant est réalisé en forme de disque.

**8.** Dispositif selon la revendication 1, dans lequel plusieurs composants sont disposés dans plusieurs ouvertures, ou plusieurs composants sont disposés l'un derrière d'autre dans une ouverture, dans lequel plusieurs composants sont avantageusement disposés l'un derrière l'autre dans une ouverture, dans lequel les composants individuels se composent de matériaux différents.

9. Dispositif selon la revendication 1, dans lequel le composant présente des structurations, avantageusement des diminutions d'épaisseur locales.

10. Dispositif selon la revendication 1, dans lequel le composant se compose d'un matériau céramique poreux, dans lequel il se trouve avantageusement comme matériau céramique des matériaux céramiques poreux ou des matériaux composites poreux en matériaux différents.

11. Dispositif selon la revendication 10, dans lequel il se trouve comme matériaux céramiques des céramiques d'oxydes et de silicates, comme l'oxyde d'aluminium, la cordiérite, la stéatite, l'oxyde de magnésium, l'oxyde de zirconium, le silicate de zirconium, le titanate d'aluminium, ou des céramiques qui ne sont pas des oxydes, comme le nitrure de silicium, le SiAlONe, le nitrure d'aluminium, le carbure de silicium, le carbure de titane, le borure de titane ou des matériaux carbonés, comme le graphite ou le carbone vitreux ou des composites, comme des oxydes liés au carbone ou des métaux durs.

12. Dispositif selon la revendication 1, dans lequel le composant présente une perméabilité au gaz dans la plage de $10^{-14}$ m$^2$ à $10^{-8}$ m$^2$, avantageusement dans la plage de $10^{-13}$ m$^2$ à $10^{-10}$ m$^2$.

13. Utilisation du dispositif selon au moins une des revendications 1 à 12 comme protection contre une surpression ou une protection contre l'éclatement.

14. Utilisation du dispositif selon la revendication 13 comme protection contre l'éclatement pour des pressions d'éclatement dans la plage de 0,5 à 2 MPa.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19511943 A1
- WO 2006002822 A1
- EP 1518003 B1
- US 3645589 A
- DE 102007045200 A1
- DE 10319840 B3
- DE 4307282 C2
- DE 102009040961 A1

**In der Beschreibung aufgeführte Nicht-Patentliteratur**

- Current Opinion. *Solid State & Material Science,* 2005, vol. 9, 230-240
- **KH.KH. KALAZHOKOV ; Z.KH. KALAZHOKOV ; KH.B. KHOKONOV.** Surface Tension of Pure Aluminium Melt. *Technical Physics,* 2003, vol. 48 (2), 272-273